# EUROPÄISCHE PATENTSCHRIFT

(11) **EP 0 952 953 B1**
(45) Veröffentlichungstag und Bekanntmachung des Hinweises auf die Patenterteilung: **06.06.2001**
(21) Anmeldenummer: 98905249.3
(22) Anmeldetag: 13.01.1998
(51) Int. Cl.: B65G 59/02, B65G 57/06

(54) **ANORDNUNG UND VERFAHREN ZUR DEPALETTIERUNG UND PALETTIERUNG**
DEVICE AND METHOD FOR LOADING AND UNLOADING PALLETS
DISPOSITIF ET PROCEDE DE DEPALETTISATION ET DE PALETTISATION

(30) Priorität: 14.01.1997 DE 19700911
(43) Veröffentlichungstag der Anmeldung: 03.11.1999
(73) Patentinhaber: Mansfeld Maschinen- und Anlagenbau GmbH, 06295 Lutherstadt Eisleben (DE)
(72) Erfinder: ENGEL, Otto, D-06313 Hergisdorf (DE)
(74) Vertreter: Haussingen, Peter
(86) Internationale Anmeldenummer: DE9800099
(87) Internationale Veröffentlichungsnummer: WO9831620

(56) Entgegenhaltungen:
- EP-A- 0 487 837
- US-A- 4 778 323
- US-A- 5 222 857
- US-A- 5 242 262

## Beschreibung

Die Erfindung betrifft eine Anordnung und ein Verfahren zur Depalettierung und Palettierung von auf produktspezifischen Quellpaletten zusammengestellten Subeinheiten u. a. zur Kommisionierung von kundenspezifischen Zielpaletten, wobei die in einem Stapelschema angeordneten Subeinheiten als empfindliche, oben offene Trays mit Stapelecken und geringer Formstabilität sowie Festigkeit ausgeführt und vorzugsweise mit offenen oder mit dünnen Deckeln versehenen Gefäßen für Frischprodukte der Lebensmittelindustrie bestückt sind.

Stückwaren werden für den Transport und die Lagerhaltung häufig in Form von Paletten zusammengefaßt, die übereinander stapelbar und mit Hilfsmitteln transportierbar sind. Kleinere Stückzahlen, als auf einer Palette möglich, werden durch Subeinheiten gruppiert bsw. Trays (Kartonagepaletten), Kartons und Kästen, die durch eine entsprechend geeignete Anordnung und Größe den verfügbaren Platz der standardisierten Paletten (Europaletten) optimal nutzen. Beim Produzenten werden diese Quellpaletten mit den Subeinheiten zumeist entsprechend des Produktionsprozesses, als produktspezifisch, bestückt, so zum Großhändler transportiert und gelagert. Der Großhändler verteilt in der Regel kleinere Stückzahlen, als auf einer Quellpalette möglich, an Einzelhändler, so daß er die Lieferung kundenspezifisch aus den Subeinheiten zusammenstellt. Aus den oben genannten Vorteilen für Transport und Lagerung bieten sich zur Gruppierung der nun kundenspezifisch heterogen zusammengesetzten Subeinheiten wiederum Zielpaletten an. Dieser Vorgang wird als Kommissionieren bezeichnet.

Ein Teilprozeß dieses Kommisionierens ist das Abstapeln der Subeinheiten von der Quellpalette, das Depalettieren.

Auf den Paletten für Frischprodukte der Lebensmittelindustrie werden als Subeinheiten in mehreren Lagen (bsw. 5) Trays gestapelt, bsw. jeweils bestückt mit Kunststoffbechem, wobei sich jede Lage aus zwei hintereinander und vier nebeneinander angeordneten Trays zusammensetzt.

Zum Depalettieren derartiger Trays von Paletten herrscht in der Lebensmittelindustrie reine Handarbeit vor.

Aus der Offenlegung DE2619156C2 ist eine Vorrichtung bekannt, mittels welcher ein Vereinzeln des Stückgutes auf Paletten mittels eines federbelasteten Förderriemens in horizontaler Richtung erfolgt. Zur Abtragung mehrerer Schichten nacheinander ist der federbelastete Förderriemen und die Stückgutaufnahme vertikal verfahrbar. Dieses Verfahren weist den Nachteil auf, daß die Stückgüter einzelner Lagen der Palette notwendig lagenweise zu einer formstabilen Platte verpreßt werden, damit es für Stückgut geeignet ist, das formschlüssig aufeinander steht, wobei dieses Verpressen bei Subeinheiten geringer Formstabilität nicht anwendbar ist.. Des weiteren ist dieses Verfahren zum Palettieren nicht geeignet.

Ein ähnliches Verfahren wird in der Offenlegung DE-AS1254536 beschrieben. Dabei erfolgt ein Verpressen der Stückgüter durch schwenkbare mechanische Klemmelemente sowie ein Abziehen von Einzelstücken mittels Mitnehmerriemen (lediglich mit Reibkraft ohne zusätzliche Anpreßkraft) auf eine ortsfeste Unterlage. Durch entsprechende Bewegungen können formschlüssig gestapelte Stückwaren depalettiert werden. Die Nachteile dieses Verfahrens sind wiederum darin zu sehen, daß sich ein Depalettieren von formschlüssig übereinander gestapelten Stückgut nur durch lagenweises Verpressen realisieren läßt. Dies ist bei Subeinheiten geringer Formstabilität nicht anwendbar. Auch eine Palettierung ist nicht möglich.

In der Offenlegung DE3022715C2 werden die Stückgüter bei der Depalettierung jeweils um 90° geschwenkt, womit eine Vereinzelung von formschlüssig gestapelten geschlossenen Subeinheiten möglich ist und Zwischenräume geschaffen werden. Der Nachteil ist jedoch, daß dies für offene Subeinheiten nicht anwendbar ist, da diese ihren Inhalt verlieren können.

Die Offenlegung DE2634506C2 beschreibt eine Anordnung und ein Verfahren, bei welchem einzelne Lagen oder mehrere Lagen einer Palette umgesetzt, d.h. depalettiert oder palettiert werden können. Die Einrichtung ist dazu horizontal und vertikal verfahrbar. Eine Gruppe von Lagen ist jeweils durch flache Zwischenlagenbogen von anderen getrennt. Diese Zwischenlage dient dazu, den eigentlichen Umsetzer ohne Beschädigung der einzelnen Stückgüter unter die zu entfernenden Lagen zu setzen. Der Nachteil dieses Verfahrens ist die Notwendigkeit eben dieser Zwischenlagen.

In der Offenlegung DE3107466A1 wird ein Verfahren zum mechanischen Abstapeln von Stückgut beschrieben, die schichtweise auf einer Palette angeordnet sind, wobei das Stückgut durch Verschieben der oberen Lage stets reihen- oder schichtweise abgestapelt werden. Zuvor erfolgt ein Anheben des Stückguts mittels mechanischer Klemmbacken und Greifer, unterstützt durch Saugnäpfe für die mittlere Packungsreihe. Der Nachteil diese Lösung ist, daß die Anwendung von Klemmen und Greifern nur für mechanisch stabile Stückgüter geeignet ist sowie die Anwendung von Saugnäpfen zum Anheben an der Oberseite bei offenen Subeinheiten unmöglich ist.

Die Offenlegung DE3915139A1 beschreibt ein Verfahren und eine Anlage zum Umordnen von sortenweise palettierten Gegenständen. Es werden Verfahren und Anlagen zum Depalettieren beschrieben, die einzelne Lagen reihenweise herunterschieben oder ein Anheben einzelner Lagen mittels einseitig oder zweiseitig wirkender Saugeinrichtungen bzw. über unterseitig eingeblasene Druckluft bewirken, bis ein Hubgeschirr oder eine Hubgabel untergreifen kann. Nach dem Depalettieren erfolgt über Einzelfördermittel der Transport und die Speicherung sowie über Gruppenbildungsstationen die flexible automatische kundenspezifische Gruppierung, die über Palettierungsgeräte auf Zielpaletten abgelegt werden. Nachteilig bei dieser Lösung ist, das sowohl das Herunterschieben als auch das Anheben über Saugeinrichtungen an gegenüberliegenden Seiten von im Stapelschema in Lagen angeordneten Subeinheiten nicht möglich ist. Ein einseitiges Anheben der Subeinheiten über Saugeinrichtungen ist auf Grund der geringen Fläche und Stabilität der Stirnflächen nicht realisierbar.

Weiterhin ist bekannt, daß zur industriellen Depalettierung Industrieroborter eingesetzt werden, die mittels Vakuumsaugnäpfen an einer geeignet großen und glatten Oberfläche (bsw. mit Folie umwickelte Einheiten) haftend angreifen und die Subeinheiten entladen. Bei magnetisierbaren Einheiten finden Magnete Anwendung zur Depalettierung. Der Nachteil dieser Verfahren ist, daß die Einschränkung auf einen speziellen Aufbau der Einheiten besteht, wie er im Anwendungsfall nicht gegeben ist, und diese nur einzeln Depalettiert werden können.

Die Druckschrift DE2212085 offenbart insbesondere die prinzipielle Verwendung von Druckluftkissen zum Depalettieren. Dazu werden Schlauchbeutel mit Noppen verwendet, die in einer speziellen Kammer angeordnet sind. Nachteilig bei dieser Ausführung der Druckluftkissen ist jedoch, daß diese speziell für das allseitige Ergreifen des Stückguts an den Ecken ausgebildet sind.

Die Druckschrift DE4128809A1 offenbart einen Depalettierer, der besonders empfindliche Paletten zu entladen gestattet. Dazu werden einzelne Stückgüter (Trays), die in einem Stapelschema angeordnet sind, mittels Greifeinrichtungen (Sauggreifer) horizontal etwas über den Stapelrand gezogen und anschließend durch vertikale Relativbewegung ein Zwischenraum zwischen diesem Tray und dem Reststapel erzeugt, in welchen ein Verschiebeblech zu Unterstützung eingebracht wird, über welches der Tray depalettiert wird. Nachteilig bei diesem Verfahren ist, daß dem Depalettiervorgang ein horizontales Verschieben des Trays vorausgehen muß, damit ein Verschiebeblech eingebracht werden kann. Dadurch lassen sich derartig "empfindliche" Trays, die mit Stapelecken formschlüssig übereinandergestapelt sind, nicht depalettieren."

Weiterhin offenbart die Druckschrift EP-A-0487837 eine Palettiermaschine, bestehend aus einem Hubrahmen, wobei diesem eine horizontal/vertikal wirksame Verfahreinrichtung zugeordnet ist, welche die Positionierung des Hubrahmens über die Palette gestattet, und wobei verfahrbare, senkrecht stehende, stim- und längsseitige Justageplatten vorhanden sind.

Der Nachteil dieser Lösung ist, daß keine hohe Haftung an den Seitenwänden der Tray-Lagen bei relativ geringen Andruckkräften gewährleistet ist. Bei den hier notwendigen hohen Andruckkräften treten unzulässige Verformungen während der Bewegung der Tray-Lagen in vertikaler Richtung auf, damit ist ein Zwischenraum für die Hubgabeln nicht mehr gegeben.

Die Aufgabe der Erfindung ist es, eine Anordnung und ein Verfahren zur Depalettierung und Palettierung zu entwickeln, die das lagenweise oder mehrlagige Depalettieren von Quellpaletten und Palettieren von Zielpaletten mit in einem Stapelschema angeordneten oben offenen und formschlüssig übereinander gestapelten Kartonage-Trays zum Inhalt hat.

Erfindungsgemäß wird die Aufgabe durch die in den Ansprüchen 1 und 4 aufgezeigten Merkmale gelöst. Bevorzugte Weiterbildungen ergeben sich aus den Unteransprüchen.

Die Vorteile der Erfindung gegenüber dem Stand der Technik bestehen darin, daß mit der erfindungsgemäßen Anordnung auch offene und formschlüssig gestapelte Kartonage-Trays (bsw. solche aus der Lebensmittelindustrie) maschinell depalettiert und palettiert werden können.

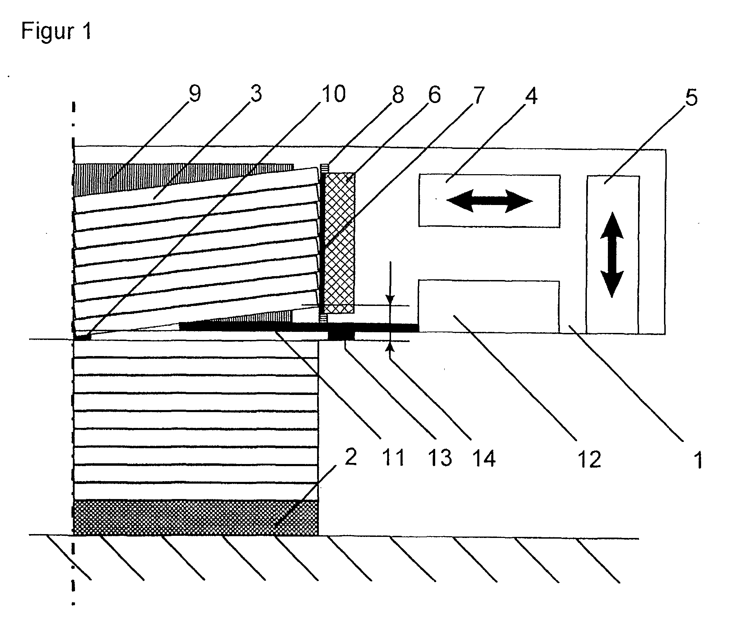

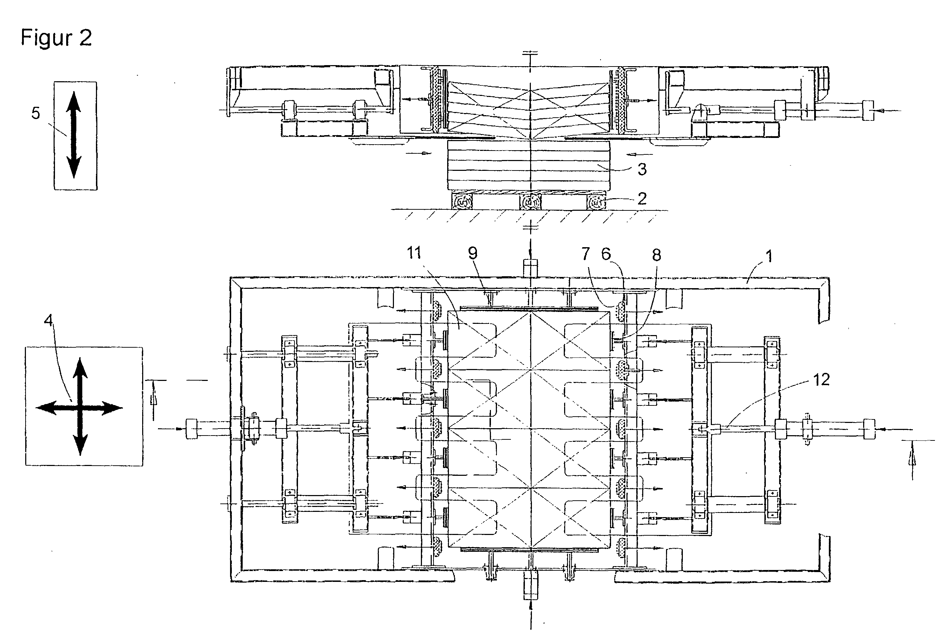

Nachstehend wird die Erfindung an Hand von
Fig. 1 als
   Anordnung zur Depalettierung und Palettierung
und ein Ausführungsbeispiel an Hand von Fig. 2
   Anordnung zur Depalettierung und Palettierung von Paletten der Lebensmittelindustrie beschrieben.

Nach Fig. 1 besteht eine Anordnung zur Depalettierung und Palettierung aus einem Hubrahmen 1, welcher die Bestandteile der Depalettierungsvorrichtung beinhaltet, einer zu depalettierenden / palettierenden Palette 2 mit einer verschiedenen Anzahl Lagen von Trays 3, die optional offenen und/ oder formschlüssig übereinander gestapelt sind. Dem Hubrahmen 1 ist eine horizontale Verfahreinrichtung 4 und eine Hubeinrichtung 5 zugeordnet, welche die Positionierung des Hubrahmens 1 über der zu depalettierenden / palettierenden Palette 2 gestattet. Der Hubrahmen 1 weist eine Symmetrieebene auf, welche zum Zeitpunkt der Ausübung seiner Funktion mit der Symmetrieebene der zu depalettierende / palettierende Palette 2 hinreichend genau übereinstimmt und beinhaltet jeweils beidseitig der Symmetrieebene Druckluftkissen 6, welche an den freien Außenflächen mit Reibbelag 7 versehen sind, verfahrbare, senkrecht stehende, stimseitige Justageplatten 8, verfahrbare, senkrecht stehende längsseitige Justageplatten 9, Positionierungsignalgeber 10, Hubgabeln 11 mit einem Hubgabelantrieb 12 sowie Zwischenraumsignalgeber 13 zur Überwachung eines Zwischenraumes 14 zwischen den liegengebliebenen und den abgehobenen Lagen von Trays 3.

Die Funktion der Anordnung zur Depalettierung und Palettierung ist dadurch gekennzeichnet, daß der aus dem Hubrahmen 1, welcher die Bestandteile der Depalettierungsvorrichtung beinhaltet, der zu depalettierende/ palettierende Palette 2 mit einer verschiedenen Anzahl Lagen von Trays 3, die optional offenen und/ oder formschlüssig übereinander gestapelt sind, zugeordnet wird. Mittels der horizontalen Verfahreinrichtung 4 wird der Hubrahmen 1 in der Symmetrieebene über der zu depalettierenden / palettierenden Palette 2 mit Hilfe der Positionierungsignalgeber 10 positioniert. Im Hubrahmen 1 sind anfangs die Druckluftkissen 6 entspannt, die Justageplatten 8, 9 und die Hubgabeln 11 eingefahrenen. Nach erfolgter Absenkung des Hubrahmens 1 in den definierten Bereich der zu depalettierenden/ palettierenden Tray-Lage durch die vertikale Hubeinrichtung 5 führen die Jusatageplatten 8, 9 die Feinjustage der Lage durch, indem ein stirnseitiges und längsseitiges Anfahren erfolgt. Zusätzlich dienen Sie der Formstabilität, indem Sie entsprechend der Seitenfläche der zu depalettierenden /palettierenden Tray-Lage(n) dimensioniert sind. Durch eine sich anschließende Druckluftbeauflagung der Druckluftkissen 6 wird, vermittelt durch den Reibbelag 7 und den Gegenhalt der stimseitigen Justageplatten 8, eine ausreichend hohe Haftung an den Seitenwänden der Tray-Lage(n) gewährleistet, um diese ohne unzulässige Verformung in vertikale Richtung bewegen (anheben) zu können. Der durch die Verformung der einzelnen Tray-Lagen (Durchhängen in der Mitte) entstehende Kantenversatz der Tray unterstützt durch den Formschlußanteil zusätzlich die Haftreibung beim Anheben. In den entstandenen Zwischenraum 14 (zwischen abgehobener und anderen Tray-Lage), der durch Zwischenraumsignalgeber 13 derart gesteuert wird, daß er ausreichend groß ist, um eine Berührung der Hubgabel(n) 11 mit einzelnen Tray-Lagen zu vermeiden, greifen anschließend ein oder mehrere Hubgabeln 11 ein. Durch den Hubgabelantrieb 12 werden die Hubgabel(n) 11 derart positioniert, daß sie kurz hinter dem Schwerpunkt der Trays 3 den Boden der Trays 3 berühren. Nach der Entspannung /Evakuierung der Druckluftkissen setzen die Tray-Lagen, gewichtsmäßig überwiegend, auf den Hubgabel(n) 11 auf und werden durch zusätzliches Einfahren der Hubgabel® 11 in Richtung Symmetrieebene depalettiert, wobei ihre Lage durch die Justageplatten weiterhin fixiert ist. Nachdem die Hubeinrichtung die depalettierten Tray-Lagen aus dem Bereich der Quellpalette herausgehoben hat erfolgt die Umordnung der sortenspezifischen Gruppierung zu der kundenspezifischer Gruppierung (Kommisionierung), indem die horizontale Verfahreinrichtung 4 beide in den Bereich der Zielpalette positioniert, die Hubeinrichtung 5 die Tray-Lage(n) auf den definierten Bereich der obersten Tray-Lage der Zielpalette absenkt, wobei der Zwischenraum 14 durch die Zwischenraumsignalgeber 13 überwacht wird, sowie die Hubgabel(n) 11 zurückgezogen werden. Bedingt durch die Fixierung der Lage der Tray-Lage(n) durch die Justierplatten 8, 9 setzen die Tray-Lage(n) derart auf der untersten Tray-Lage der Zielpalette auf, daß sie Formschluß eingehen und somit palettiert werden. Die Anordnung gestattet eine periodische und kontinuierliche Ausführung dieser Depalettierung, Kommisionierung, Palettierung.

Im Ausführungsbeispiel nach Fig. 2 besteht eine Anordnung zur Depalettierung und Palettierung von Paletten der Lebensmittelindustrie aus einem Hubrahmen 1, welcher die Bestandteile der Depalettierungsvorrichtung beinhaltet, einer zu depalettierende / palettierende Palette 2 mit einer verschiedenen Anzahl Lagen von Trays 3 in der Anordnung [2 x N] (wobei N eine natürliche Zahl ist), die optional offenen und/ oder formschlüssig übereinander gestapelt sind. Dem Hubrahmen 1 ist eine horizontale Verfahreinrichtung 4 und eine Hubeinrichtung 5 zugeordnet, welche die Positionierung des Hubrahmens 1 über der zu depalettierenden / palettierenden Palette 2 gestattet. Der Hubrahmen 1 weist eine Symmetrieebene auf, welche zum Zeitpunkt der Ausübung seiner Funktion mit der Symmetrieebene der zu depalettierende/ palettierende Palette 2 hinreichend genau übereinstimmt und beinhaltet jeweils beidseitig der Symmetrieebene N Stück Druckluftkissen 6, welche an den freien Außenflächen mit Reibbelag 7 versehen sind, verfahrbare, senkrecht stehende, stirnseitige Justageplatten 8, verfahrbare, senkrecht stehende längsseitige Justageplatten 9 sowie N Stück Hubgabeln 11 mit einem gemeinsamen Hubgabelantrieb 12.

### Verwendete Bezugszeichen

- 1: Hubrahmen
- 2: Palette
- 3: Trays
- 4: horizontale Verfahreinrichtung
- 5: Hubeinrichtung
- 6: Druckluftkissen
- 7: Reibbelag
- 8: stirnseitigen Justageplatten
- 9: längsseitige Justageplatten
- 10: Positionierungsignalgeber
- 11: Hubgabel
- 12: Hubgabelantrieb
- 13: Zwischenraumsignalgeber
- 14: Zwischenraum
verwendete Abkürzungen
- u. a.:: unter anderen
- bsw.:: beispielsweise

## Patentansprüche

1. Anordnung zur Depalettierung und Palettierung, bestehend aus einem Hubrahmen (1), welcher Hubgabeln (11) mit einem Hubgabelantrieb (12) sowie weitere Bestandteile der Depalettierungsvorrichtung beinhaltet wobei dem Hubrahmen (1) eine horizontale Verfahreinrichtung (4) und eine vertikale Hubeinrichtung (5) zugeordnet ist, welche die Positionierung des Hubrahmens (1) über einer zu depalettierenden / palettierenden Palette (2) gestattet, und wobei verfahrbare, senkrecht stehende, stirn- und längsseitige Justageplatte (8, 9) vorhanden sind sowie der Hubrahmen (1) eine vertikale Symmetrieebene aufweist, welche zum Zeitpunkt der Ausübung seiner Funktion mit einer vertikalen Symmetrieebene der zu depalettierende / palettierende Palette (2) hinreichend genau übereinstimmt, dadurch gekennzeichnet,
daß die zu depalettierenden / palettierenden Palette (2) mit einer verschiedenen Anzahl Lagen von in einem Stapelschema angeordneten empfindlichen Trays (3) mit Stapelecken und geringer Formstabilität sowie Festigkeit, die oben offenen und formschlüssig übereinander gestapelt sind, bestückt ist,
daß jeweils beidseitig der vertikalen Symmetrieebene den Hubgabeln (11) zugeordnete Druckluftkissen (6), mit angeordnetem Reibbelag (7) angebracht sind, denen eine Vorrichtung zur Druckluftbeaufschlagung und Entspannung der Druckluftkissen (6) zugeordnet ist.

2. Anordnung zur Depalettierung und Palettierung nach Anspruch 1 speziell für die Depalettierung und Palettierung von Tray-Lagen, die auf der Palette (2) in der Form [2 x N] angeordnet sind, dadurch gekennzeichnet, daß der Hubrahmen (1) aus jeweils symmetrisch N Stück der Druckluftkissen (6) mit Reibbelag (7) und / oder N Stück Hubgabeln (11) besteht.

3. Anordnung zur Depalettierung und Palettierung nach Anspruch 1 oder 2, dadurch gekennzeichnet,
daß Positionierungsignalgeber (10) zur hinreichend genauen Positionierung des Hubrahmens (1) sowie Zwischenraumsignalgeber (13) zur Überwachung eines Zwischenraumes (14) zwischen den liegengebliebenen und den abgehobenen Lagen von Trays (3) vorhanden sind.

4. Verfahren zur Depalettierung und Palettierung, mit einer Anordnung nach einem der Ansprüche 1 bis 3, dadurch gekennzeichnet, daß
in einem ersten Schritt
der Hubrahmen (1) mittels der horizontalen Verfahreinrichtung (4) in der Symmetrieebene der Palette (2) und durch die vertikale Hubeinrichtung (5) im Bereich der zu depalettierenden / palettierenden Tray-Lage positioniert wird, wobei die Druckluftkissen (6) entspannt, die Justageplatten (8), (9) und die Hubgabeln (11) eingefahren sind, und die Feinjustage über die Justageplatten (8), (9) durch stirnseitiges und längsseitiges Anfahren durchgeführt wird,
in einem zweiten Schritt
eine Druckbeaufschlagung der Druckluftkissen (6), welche vermittelt durch den Reibbelag (7) und den Gegenhalt der stirnseitigen Justageplatte (8) eine ausreichend hohe Haftung an den Seitenwänden der Tray-Lagen gewährleistet wird, um diese ohne unzulässige Verformung in vertikale Richtung bewegen zu können, um einen Zwischenraum (14) für die Hubgabeln (11) zu gewährleisten,
in einem dritten Schritt
in den entstandenen Zwischenraum (14) mittels des Hubgabelantriebs (12) die Hubgabel (11) derart positioniert wird, daß sie kurz hinter dem Schwerpunkt der Trays (3) deren Boden berührt und die Trays (3) nach der Entspannung der Druckluftkissen (6) gewichtsmäßig überwiegend auf der Hubgabel (11) aufsetzen sowie durch weiteres Einfahren der Hubgabel (11) depalettiert und mittels der horizontalen Verfahreinrichtung (4) und der Hubeinrichtung (5) aus dem Bereich der Palette (2) herausgebracht werden, wobei ihre Lage durch die Justageplatten (8), (9) weiterhin fixiert ist und
in einem optionalen vierten Schritt
die Umordnung der sortenspezifischen Gruppierung zu der kundenspezifischer Gruppierung erfolgt, indem die horizontale Verfahreinrichtung (4) die depalettierten Trays (3) in den Bereich einer Zielpalette positioniert, die Hubeinrichtung (5) die Trays (3) auf den definierten Bereich der obersten Tray-Lage der Zielpalette absenkt, wobei optional der Zwischenraum (14) durch die Zwischenraumsignalgeber (13) überwacht wird, und die Hubgabel(n) (11) zurückgezogen werden, wobei die Justierplatten (8), (9) sicherstellen, daß die Trays (3) fixiert auf der untersten Tray-Lage der Zielpalette aufsetzen, Formschluß eingehen und somit palettiert werden.

## Claims

1. Depalletizing and palletizing apparatus, consisting of a lifting frame (1), which contains lifting forks (11) having a lifting fork drive (12) and contains further components of the depalletizing device, wherein a horizontal displacing device (4) and a lifting device (5) is allocated to the lifting frame (1), which permits positioning of the lifting frame (1) over a pallet (2) to be depalletized / palletized and the lifting frame (1) comprises a vertical plane of symmetry which, when the lifting frame is operating, coincides in a sufficiently precise manner with a vertical plane of symmetry of the pallet (2) to be depalletized / palletized, characterised in that
the pallet (2) to be depalletized / palletized is provided with a different number of layers of delicate trays (3) disposed in a stacked arrangement having stacking corners and a low level of form-stability and strength, which are stacked one above the other in a form-fit manner and open in the upwards direction,
compressed air cushions (6) are attached on each side of the plane of symmetry and are provided on the free outer surface with a friction lining (7) and
displaceable, vertical adjusting plates (8) on the end face and displaceable, vertical adjusting plates (9) on the long side are provided.

2. Depalletizing and palletizing apparatus according to claim 1, especially for depalletizing and palletizing tray layers which are disposed on the pallet (2) in the form [2 x N], characterised in that the lifting frame (1) consists of N compressed air cushions (6) with the friction lining (7) and/or N lifting forks (11) in each case in a symmetrical arrangement.

3. Depalletizing and palletizing apparatus according to claim 1 or 2, characterised in that positioning signal transmitters (10) are provided for sufficiently precise positioning of the lifting frame (1) and intermediate space signal transmitters (13) are provided to monitor an intermediate space (14) between the layers of trays (3) which have been left behind and those which have been lifted.

4. Depalletizing and palletizing method, in particular with an apparatus according to one of claims 1 to 3, characterised in that
in a first step
the lifting frame (1) is positioned in the plane of symmetry of the pallet (2) by means of the horizontal displacing device (4) and in the region of the tray layer to be depalletized / palletized by means of the vertical lifting device (5), wherein the compressed air cushion (6) is depressurised, the adjusting plates (8), (9) and the lifting forks (11) are moved inwards and the fine adjustment by means of the adjusting plates (8), (9) is carried out by their approaching the end faces and long sides,
in a second step
the compressed air cushion (6) is pressurised and by means of the friction lining (7) and the counter-holding action of the end-face adjusting plate (8) a sufficiently high adhesive friction is produced and the trays (3) are tilted,
in a third step
the lifting fork (11) is positioned into the resulting intermediate space (14) by means of the lifting fork drive (12) in such a way that it touches the base of the trays (3) just behind the centre of gravity thereof and, after the compressed air cushions (6) are depressurised, the trays (3) are placed predominantly - in terms of weight - on the lifting fork (11) and are depalletized by the lifting fork (11) moving further in and are removed from the region of the pallet (2) by means of the horizontal displacing device (4) and the lifting device (5), wherein their position is further fixed by means of the adjusting plates (8), (9) and
in an optional fourth step
the conversion from the type-specific grouping to the customer-specific grouping is carried out in that the horizontal displacing device (4) positions the depalletized trays (3) into the region of a target pallet, the lifting device (5) lowers the trays (3) onto the defined region of the uppermost tray layer of the target pallet, wherein the intermediate space (14) is optionally monitored by the intermediate space signal transmitters (13), and the lifting fork(s) (11) are retracted, wherein the adjusting plates (8), (9) ensure that the trays (3) are placed in a fixed manner on the lowermost tray layer of the target pallet, enter into a form-fit arrangement and are thereby palletized.

## Revendications

1. Dispositif de dépalettisation et de palettisation dans lequel :
• un cadre de levage (1) comporte des fourches de levage (11), un entraînement (12) de ces fourches ainsi que d'autres composants du dispositif de dépalettisation,
• au cadre de levage (1) sont associés un dispositif d'avancement (4) horizontal et un dispositif de levage (5) vertical qui définissent la position du cadre (1) au-dessus de la palette (2) à charger ou à décharger, ainsi que des plaques d'ajustage frontales et longitudinales (8, 9) mobiles, verticales,
• le cadre de levage (1) présente un plan vertical de symétrie qui, au moment où le dispositif de levage fonctionne, coïncide avec une précision suffisante avec un plan vertical de symétrie de la palette (2) à charger ou à décharger,
caractérisé en ce que
• la palette (2) à charger ou à décharger est garnie d'un nombre divers de couches de plateaux (3) sensibles disposés dans un schéma à empilage comprenant des coins d'empilage et présentant une stabilité de forme et une résistance faibles, les plateaux étant ouverts en haut et empilés les uns sur les autres avec emboîtement par combinaison de formes, et
• des deux côtés du plan de symétrie vertical se trouvent des coussins d'air comprimé (6) associés aux fourches (11) et portant un revêtement à friction (7), avec un dispositif (8) de mise en pression et de détente des coussins à air comprimé (6).

2. Dispositif selon la revendication 1, destiné spécialement à la dépalettisation et à la palettisation des couches de plateaux disposés sur les palettes (2) en [2 x N],
caractérisé en ce que
le cadre de levage (1) est constitué de deux ensembles symétriques composés de N coussins d'air comprimé (6) avec revêtement à friction (7) et/ou de N fourches de levage (11).

3. Dispositif selon la revendication 1 ou 2,
caractérisé en ce que
des indicateurs de position (10) à signaux assurent un positionnement suffisamment précis du cadre de levage (1), ainsi que des indicateurs d'intervalle (13) à signaux surveillent l'intervalle (14) séparant les couches restées en place et les couches soulevées des plateaux (3).

4. Procédé de dépalettisation et de palettisation au moyen d'un dispositif selon les revendications 1 à 3,
caractérisé en ce que
• dans une première étape, le châssis de levage (1), est positionné au moyen du dispositif d'avancement horizontal (4) dans le plan de symétrie de la palette (2), et par le dispositif de levage vertical (5) dans la zone de la couche à décharger/charger, les coussins d'air comprimé (6) étant détendus, les plaques d'ajustement (8, 9) et les fourches de levage (11) étant avancées, puis l'ajustement fin étant assuré par le déplacement frontal et longitudinal des plaques d'ajustage (8, 9),
• dans une deuxième étape, les coussins (6) sont comprimés, et, en combinaison avec le revêtement à friction (7) et le maintien oppositionnel assuré par les plaques frontales d'ajustage (8), ils créent un frottement d'adhérence suffisamment élevé sur les parois latérales des couches pour pouvoir les déplacer verticalement sans déformation inadmissible et garantir un intervalle (14) pour des fourches de levage (11),
• dans une troisième étape, l'entraînement des fourches (12) positionne les fourches de levage (11) dans l'intervalle (14) créé, de manière qu'elles soient en contact avec le fond des plateaux (3) un peu en arrière du centre de gravité des plateaux (3), et après détente des coussins à air comprimé (6) les plateaux (3) se posent principalement par gravité, sur les fourches de levage (11), de sorte qu'une introduction complémentaire des fourches (11) dépalettise les plateaux, et que le dispositif d'avancement horizontal (4) combiné au dispositif de levage (5) les fait sortir de la zone de la palette (2), leur position étant de plus fixée par les plaques d'ajustage (8, 9), et
• dans une quatrième étape, optionnelle, s'effectue le passage du groupage par natures d'objet au groupage destiné au client, le dispositif d'avancement horizontal (4) amène les plateaux dépalettisés (3) en positon dans la zone d'une palette-cible, le dispositif de levage (5) fait descendre les plateaux (3) dans la zone définie de la couche supérieure de cette palette, avec surveillance optionnelle de l'intervalle (14) par les indicateurs de position à signaux (13), la ou les fourche(s) (11) de levage est/sont reculée(s), et les plaques d'ajustage (8, 9) garantissent que les plateaux (3) se posent de façon fixe sur la couche située en dessous sur la palette-cible, s'unissent par combinaison de formes et se trouvent donc palettisés.
